# EUROPEAN PATENT SPECIFICATION

(11) **EP 1 876 039 B1**
(45) Date of publication and mention of the grant of the patent: **18.04.2012**
(21) Application number: 07011786.6
(22) Date of filing: 15.06.2007
(51) Int. Cl.: B60C 19/08

(54) **Hybrid rubber tape and method for manufacturing pneumatic tire**
Hybrides Gummiband und Herstellungsverfahren für einen Luftreifen
Bande de caoutchouc hybride et procédé de fabrication d'un pneu

(30) Priority: 04.07.2006 JP 2006184744; 04.07.2006 JP 2006184745
(43) Date of publication of application: 09.01.2008
(73) Proprietor: SUMITOMO RUBBER INDUSTRIES, LTD., Hyogo-ken (JP)
(72) Inventor: Takahashi, Masanori, Kobe-shi Hyogo-ken (JP); Sugiyama, Naoki, Kobe-shi Hyogo-ken (JP)
(74) Representative: Manitz, Finsterwald & Partner GbR

(56) References cited:
- EP-A- 1 632 367
- EP-A- 1 738 893
- WO-A-2007/097104

## Description

### Background of the invention

The present invention relates to a pneumatic tire, more particularly to a structure for an unvulcanized rubber tape to be wound into a tire rubber component which structure can provide a conductive path to discharge static electricity, and a method for manufacturing a pneumatic tire by the use of the rubber tape.

In recent years, as disclosed in us Patents 6554041 and 6576077, a tire manufacturing method in which, in building a green tire, its raw rubber components, e.g. tread rubber, sidewall rubber and the like are formed by overlap winding an unvulcanized rubber tape a large number of times, is highly appreciated by tire manufacturers because the rubber extruders can be downsized and as a result the plant size, equipment costs and the like can be reduced.

On the other hand, in view of reduction of petrochemicals used in a tire, the use of silica rich compounds instead to conventional carbon rich compounds is preferred. Such silica rich compounds are known as high-performance rubber, and as disclosed in us Patent 5942069 for example, in order to improve the rolling resistance and wet grip performance of a pneumatic tire, a silica rich compound is used as the tread rubber.

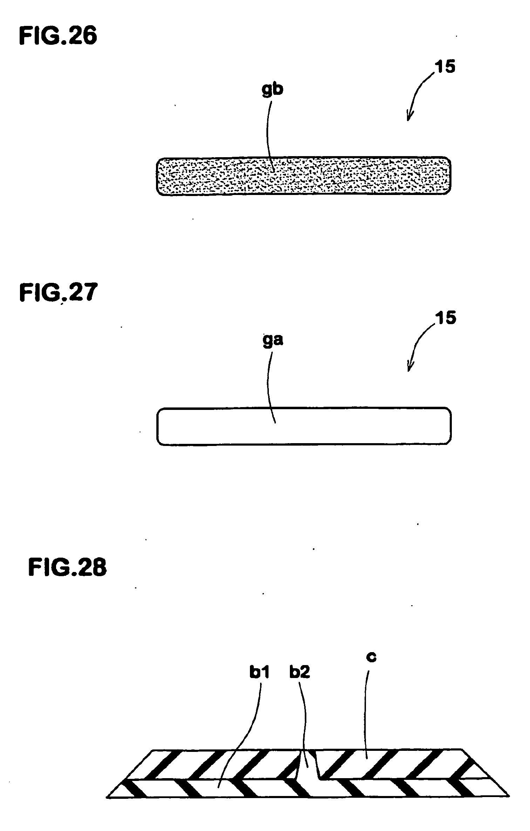

As the silica rich compositions are poor in the electrical conductivity, the electric resistance between the tread and bead of the tire becomes very high, namely, the tire as whole becomes an insulator, and accordingly, static electricity is liable to build up on the vehicle body. Therefore, in the case of US Patent 5942069, as schematically shown in Fig. 28, a base tread rubber (b1) made of a conductive rubber compound is disposed on the underside of the silica rich tread rubber (c), and in order to discharge static electricity, penetrating parts (b2) extending from the base tread rubber (b) to the tread face through the silica rich tread rubber (c) are provided.

Document EP1632367 discloses a pneumatic tire comprising a rubber component made of vulcanized windings of a hybrid rubber tape having a width of from 5 to 20 mm and a thickness of from 0.5 to 2.0 mm, the hybrid rubber tape comprising a conductive rubber part extending continuously in the longitudinal direction of the tape and made of a conductive rubber compound, anda less-conductive rubber part made of a less-conductive rubber compound, wherein the volume resistivity of the conductive rubber part after vulcanized is lower than the volume resistivity of the less-conductive rubber part after vulcanized.

WO 2007/097104 A1 (which claims a priority earlier than the patent application of the present text but was not published before the filing date of the application of the present text and therefore constitutes prior art in accordance with Article 54(3) EPC) discloses a pneumatic tire having the features of the preamble of claim 1.

### Summary of the invention

An object of the present invention is to provide a pneumatic tire and a method for manufacturing a pneumatic tire comprising a rubber tape capable of achieving a good electrical conductivity and high performance at the same time and improving the tire production efficiency.

This object is achieved with a pneumatic tire having the features of claim 1 and a method for manufacturing a pneumatic tire having the features of claim 9. Subclaims are directed to preferable embodiments. Other and further objects, features and advantages of the invention will appear more fully from the following description.

### Brief Description of the Drawings

Fig.1 is a cross sectional view of a pneumatic tire according to the present invention.
Figs. 2 and 3 are enlarged cross sectional views each showing an unvulcanized hybrid rubber tape according to the present invention.
Figs. 4, 5A and 5B show enlarged cross sectional views each showing an unvulcanized hybrid rubber tape not according to the invention for illustration purposes.
Fig.6 is a diagram showing an apparatus for making the hybrid rubber tape incorporated in an apparatus for winding the hybrid rubber tape.
Fig.7 is a diagram showing another example of the apparatus for making the hybrid rubber tape.
Fig. 8A, 8B and 8C are enlarged cross sectional views of a hybrid rubber tape for explaining a process of making the tape.
Fig. 8D shows the process with a rubber tape not according to the invention.
Fig.9 is a diagrammatic cross sectional view for explaining a method for manufacturing the pneumatic tire according to the present invention.
Fig.10 is a diagrammatic cross sectional view for explaining a method for manufacturing the tread rubber by overlap winding the hybrid rubber tape.
Figs.11-17 are cross sectional views each showing a way of overlap winding the hybrid rubber tape into the tread rubber, wherein Figs. 12, 13, 15 and 17 show the use of a rubber tape not according to the invention.
Figs.18 and 19 are enlarged cross sectional views each showing the surface layer of windings of the unvulcanised hybrid rubber tape, wherein Fig. 19 shows a rubber tape not according to the invention.
Figs.20-23 are diagrams for explaining various ways of electrically connecting the hybrid rubber tape to the internal conductive structure.
Fig.24 is a diagram for explaining a way of winding the hybrid rubber tape which can execute the connecting shown in Fig.23.

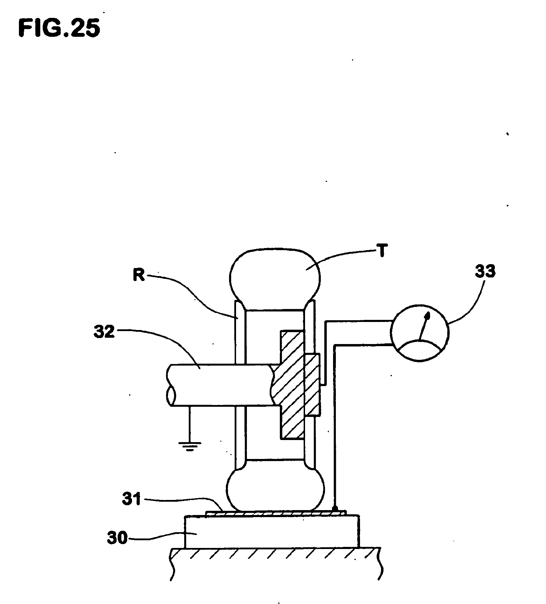

Fig.25 is a diagram for explaining the method and device for measuring the electric resistance of a tire.
Figs.26 and 27 are enlarged cross sectional views of a tape of a conductive rubber compound and a tape of a less-conductive rubber compound, respectively.
Fig.28 is a schematic cross sectional view of a tread rubber strip of prior art.

### Description of the preferred Embodiments

Embodiments of the present invention will now be described in detail in conjunction with the accompanying drawings.

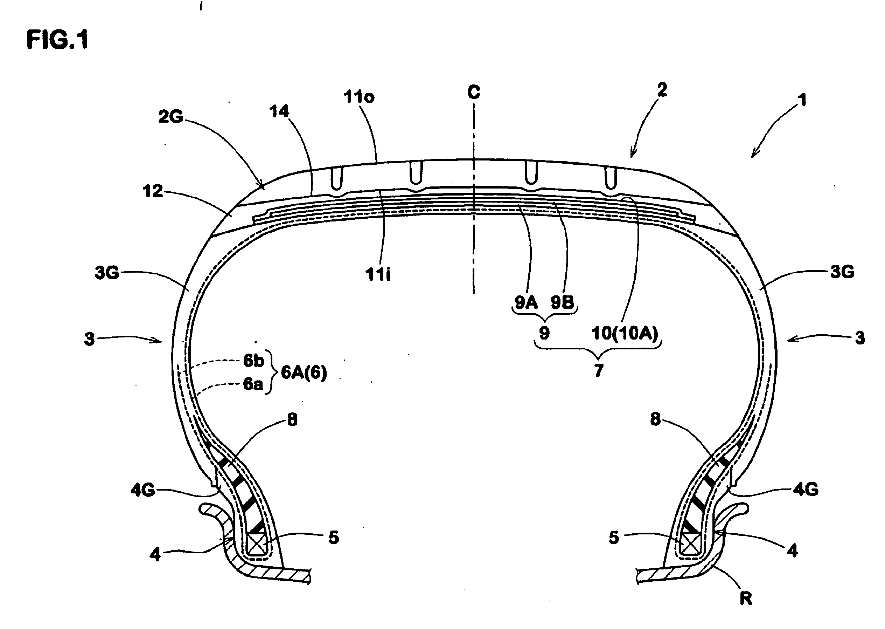

As shown in Fig. 1, a pneumatic tire 1 comprises a tread portion 2, a pair of sidewall portions 3, and a pair of axially spaced bead portions 4 as well known in the art, and in order to reinforce the tire 1, a bead core 5 is disposed in each of the bead portions 4. A carcass 6 is provided to extend between the bead portions 4 through the tread portion 2 and sidewall portions 2. A tread reinforcing belt 7 is disposed radially outside the carcass 6 in the tread portion 2. In the tread portion 2, a tread rubber 2G defining the tread surface is disposed radially outside the tread reinforcing belt 7. In each of the sidewall portions 3, a sidewall rubber 3G defining the outer surface of the sidewall portion 3 is disposed axially outside the carcass 6. In each of the bead portions 4, a bead rubber 4G defining the axially outer surface and bottom surface of the bead portion 4 is disposed. In addition to such typical rubber components 2G, 3G and 4G, various rubber components may be used.

According to the present invention, in order to discharge static electricity from the vehicle body to the ground, the tire 1 is provided with an electrically conductive path which extends from the surface of the bead portion 4 contacting with a wheel rim R to the tread surface contacting with the ground, and in order to make at least a part of such electrically conductive path, a rubber component of the tire, e.g. the tread rubber 2G, sidewall rubber 3G and the like which is included in the electrically conductive path, is formed by winding an unvulcanized hybrid rubber tape 15 a large number of times (for example, several dozen times) into a predetermined cross sectional shape corresponding to that of the uncured rubber component to be made.

### Embodiments of Hybrid rubber tape

The unvulcanized hybrid rubber tape 15 comprise a part 15b made of an electrically conductive rubber compound (gb), and the remaining part 15a is mainly made of a less-conductive rubber compound (ga).

The conductive rubber part 15b has to extend continuously along the length of the tape 15, defining a part of the surface of the tape 15 at least on one side F1, and it is desirable that, in the cross section of the tape 15, the sectional area Kb of the conductive rubber part 15b is at least 0.5 sq.mm, preferably more than 2.0 sq.mm, more preferably more than 4.0 sq.mm to maintain a good conductivity in the longitudinal direction of the tape. But in the case of the undermentioned tape used to make the tread rubber, the sectional area Kb is preferably not more than 10.0 sq.mm to derive the high performance nature of the less-conductive rubber compound (ga).

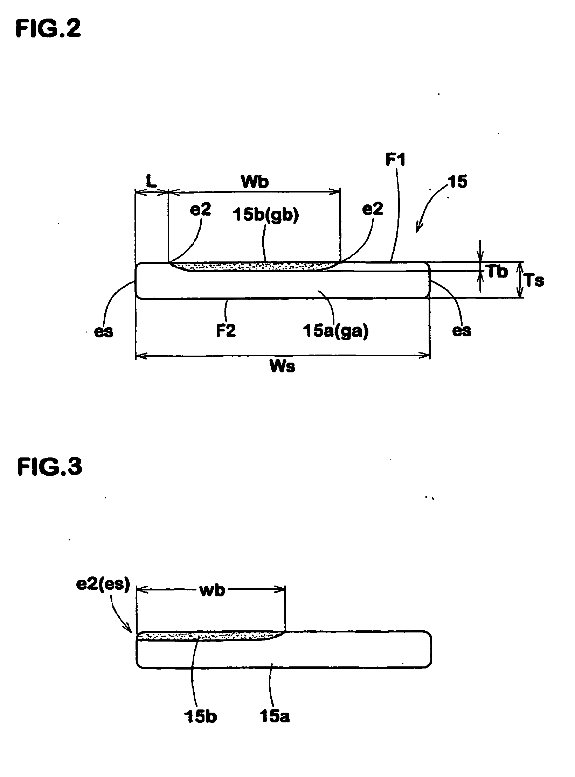

Figs.2, 3, 4 and 5(5A, 5B) each show an example of the cross-sectional structure of the tape 15.

In Fig. 2, the conductive rubber part 15b forms a middle part of the surface on one side F1 of the tape 15 spaced apart from both edges (es) of the tape 15, and does not reach to the other side F2 of the tape 15. The less-conductive rubber part 15a forms the remaining part of the surface and continuously extends between the edges (es).

In Fig. 3, the conductive rubber part 15b forms a part of the surface on one side F1 of the tape 15 which part extends from one of the edges (es) to the middle of the tape 15 and does not reach to the other side F2 of the tape 15. The less-conductive rubber part 15a forms the remaining part of the surface, and continuously extends between the edges (es).

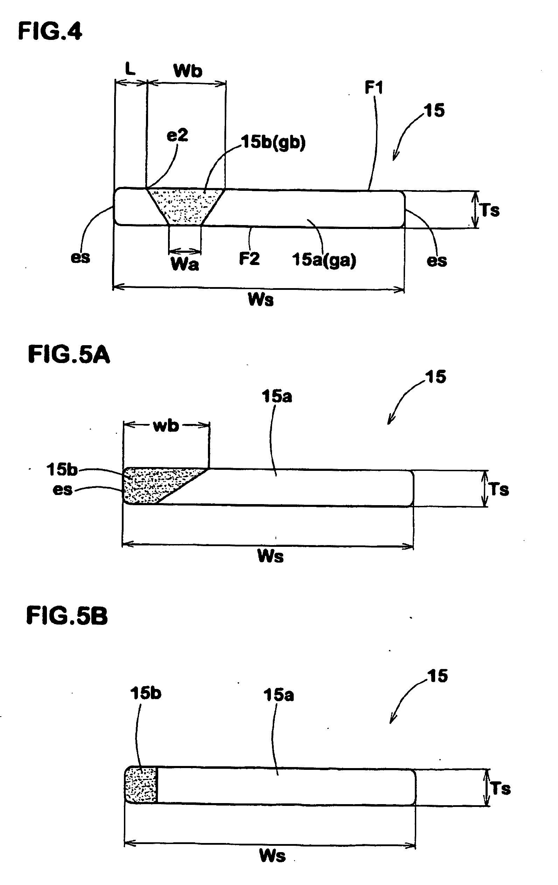

In Fig. 4, contrary to the former two examples and not in accordance with the invention, the conductive rubber part 15b reaches to the other side F2 of the tape 15 so as to form a part of the surface on one side F1 and a part of the surface on the other side F2, and in this example, each part is spaced apart from both edges (es) of the tape 15.

In Fig. 5 (5A 5B), similarly to the Fig. 4 example and not in accordance with the invention, the conductive rubber part 15b reaches to the other side F2, and a part of the surface on one side F1 and a part of the surface on the other side F2 are formed by the conductive rubber compound (gb), and in this example, both parts extend from one of the edges (es) of the tape 15 towards the other edge.

### ** conductive rubber compound (gb)

The conductive rubber compound (gb) has to have a volume resistivity of lower than 1.0X10^8 (ohm cm), preferably lower than 1.0X10^7 (ohm cm) after vulcanization.

For that purpose, as a reinforcing filler, carbon black is used in this example to lower the volume resistivity.

The content of the carbon black is not less than 10, preferably not less than 20, but not more than 100, preferably not more than 80 parts by weight with respect to 100 parts by weight (or mass) of a rubber polymer.

In this embodiment, as the additive to provide a conductivity, carbon black is used alone. But, ionic conductive substances, e.g. lithium salts and the like can be used can be used alone or in combination with carbon black.

In this specification, the volume resistivity refers to a value measured with an ohm meter (ADVANTESTER 8340A) at a temperature of 25 deg.c., a relative humidity of 50 % and an applied voltage of 500v, using a 150mmx150mmx2mm specimen.

### ** Less-conductive rubber compound (ga)

The less-conductive rubber compound (ga) has a volume resistivity which is higher than that of the conductive rubber compound (gb) (for example, higher than 1.0x10^8 ohm cm) as a result of seeking of high performance rubber. Thus, the absolute value of the volume resistivity is not critical.

In this example, the less-conductive rubber compound (ga) is a silica rich compound containing silica as a reinforcing filler, thus, the hysteresis loss is relatively large even at low temperature, and even when the temperature is raised, the hysteresis loss is relatively small. Therefore, when used as the tread rubber 2G, the rolling resistance and wet performance of the tire can be improved.

In view of the reinforcing effect and the processability of the rubber compound, it is preferable for the silica that: the BET surface area determined from nitrogen adsorption is in a range of from 150 to 250 sq.m/g; and the dibutyl phthalate (DBP) oil absorption is not less than 180ml/100g; and further it show colloidal characteristic.

Preferably, the silica content is in a range of not less than 30, more preferably not less than 40, but not more than 100, more preferably not more than 80, still more preferably not more than 60 parts by weight, with respect to 100 parts by weight (or mass) of a rubber polymer.

As to silane coupling agent, vis(triethoxysilylpropyl) tetrasulfide, alpha-mercaptpropyltrimethoxysilane or the like can be preferably used.

Aside from silica, aluminum hydroxide, calcium carbonate and the like may be used as a reinforcing filler for the less-conductive high-performance rubber compound (ga).

### ** Rubber polymers

As to the rubber polymers of the less-conductive rubber compound (ga) and conductive rubber compound (gb), various polymers, e.g. natural rubber (NR), butadiene rubber (BR), emulsion styrene butadiene rubber (E-SBR), solution styrene butadiene rubber (S-SBR), synthesis polyisoprene rubber (IR), nitrile rubber (NBR), chloroprene rubber (CR) and the like can be used alone or in combination.
In this embodiment, SBR and BR are used in both of the rubber compounds (ga) and (gb). But, the use of natural rubber is also preferred in order to lessen the use of petrochemicals.

The conductive rubber compound (gb) can contain silica in addition to the carbon black to satisfy other requirements for the rubber component to be made, for example, elastic modulus, hardness and like. However, in order to secure the necessary conductivity, the carbon black content has to be at least 30 % of the total weight of the reinforcing fillers.

Similarly, the less-conductive rubber compound (ga) can contain carbon black in addition to the silica to satisfy other requirements for the rubber component to be made, for example, elastic modulus, hardness and like. In such a case, however, it is preferable that the carbon black content is at most 10 % of the total weight of the reinforcing fillers.

### * Embodiments of Apparatus for making Rubber tape

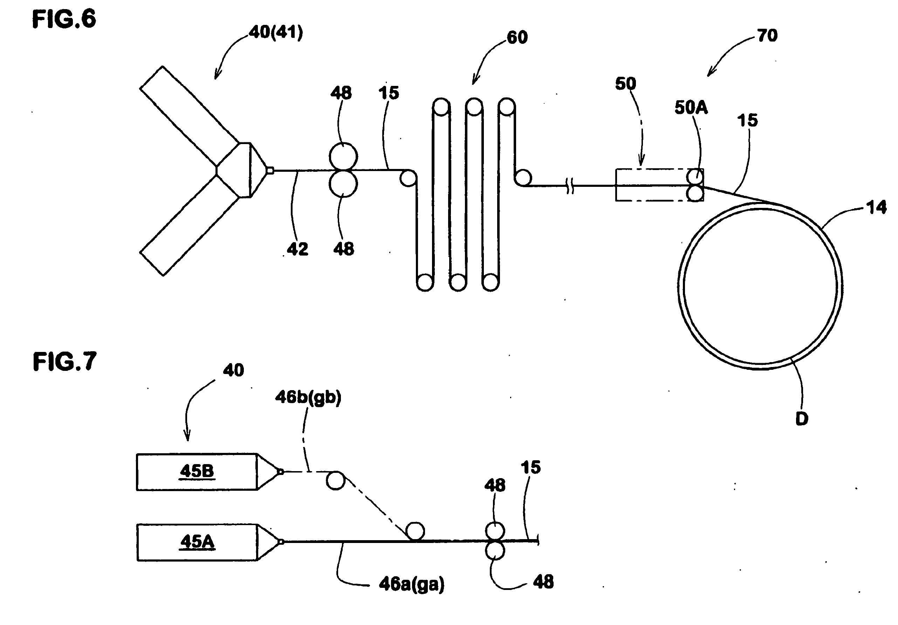

Fig.6 and Fig.7 each show an apparatus 40 for making the hybrid rubber tape 15.

The hybrid rubber tape 15 shown in Fig.2, 3, 4 or 5 can be made, using a twin-screw extruder 41 as shown in Fig. 6. The twin-screw extruder 41 can extrude the two rubber compounds (ga and gb) from one nozzle in the form of a single tape 42 having a cross sectional structure shown in Fig.2, 3, 4 or 5.

In the case of the hybrid rubber tape 15 shown in Fig. 2, 3 or 5, the tape 15 can be made, using two single-screw extruders 45A and 45B as shown in Fig.7.

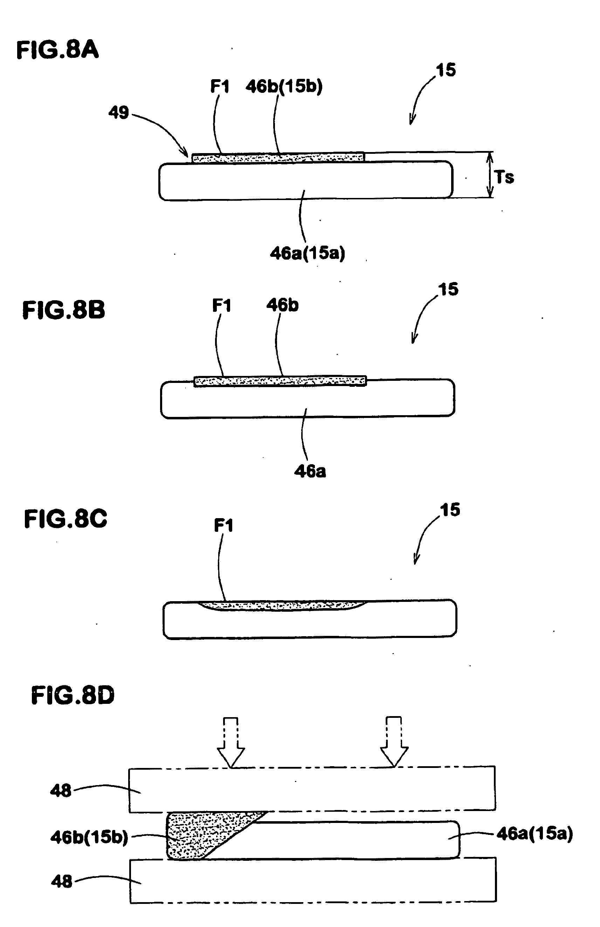

For example, in the case of Fig. 2, the extruder 45A extrudes the less-conductive rubber compound (ga) in the form of a tape 46a. The extruder 45B extrudes the conductive rubber compound (gb) in the form of a tape 46b. Then, as shown in Fig.8A, the extruded two tapes 46a and 46b are applied to each other.
If the surface (F1) of the tape 15 is uneven as shown in Fig. 8A or a small step 49 is formed between the surfaces of the two tapes 46a and 46b, it will be almost no significant matter in respect of the winding accuracy and operation and the precision of the cross sectional shape of the rubber component.
But, in order to increase the adhesion therebetween, it is preferable that the tapes 46a and 46b are pressed between calender rollers 48 such that the tape 46b partially sinks into the tape 46a and the step 49 is decreased as shown in Fig. 8B, or the tape 46b completely sinks into the tape 46a and the surface F1 becomes flat as shown in Fig. 8C.

Further, in the case of Fig.5A for example, the tapes 46a and 46b are extruded in almost complemental pentagonal cross sectional shapes, and connected by overlapping their slant faces and passing through between the calender rollers 48.

The press operation using the calender rollers 48 is also preferred in the case of the twin-screw extruder 41 because the extruded tape tends to have an uneven surface due to the difference in elastic modulus between the two raw rubber compounds (ga and gb).

Thus, the apparatus 40 for making the hybrid rubber tape 15 comprises at least one extruder (41, 45A, 45B) and the calender rollers 48.

The apparatus 40 can make a tape made of only the less-conductive rubber compound (ga) by stopping the conductive rubber compound (gb). Also it can make a tape made of only the conductive rubber compound (gb) by stopping the less-conductive rubber compound (ga).

In any case, in view of the production efficiency of the uncured rubber component made by winding the tape, and in order that the windings can accurately reproduce the target cross sectional shape of the uncured tire rubber component, it is preferable that, at the time of winding the rubber tape, it has a thickness Ts in a range of from 0.5 to 3.0 mm and a width ws in a range of not less than 5 mm, preferably not less than 10 mm, more preferably not less than 15 mm, but not more than 50 mm, preferably not more than 40 mm, more preferably not more than 30 mm. The aspect ratio WS/TS between the width ws and thickness Ts is more than 2, preferably more than 5, more preferably more than 8, still more preferably more than 12.

In the above-illustrated examples of the tape 15, the thickness Ts is substantially constant across the entire width Es, therefore, the tape has a rectangular cross sectional shape. But, it is not always necessary that the tape is rectangular, various shapes, for example, parallelogram, trapezoid and the like whose edges are tapered; and shapes whose edges have a steppedly reduced thickness less than the central main portion; an elliptic shape close to a flat rectangle and the like can be used as far as a sufficient cross sectional shape area of the conductive rubber part 15b can be secured as follows.

In the cross section of the tape, the area Kb of the conductive rubber part 15b has to be more than 1 %, more preferably more than 2 %, still more preferably more than 5 % of the cross sectional area K0 of the hybrid rubber tape 15 to lower the electrical resistance of the tape in its longitudinal direction. However, in view of dynamic tire performances, the sectional area kb is preferably not more than 30 %, more preferably not more than 25 %, still more preferably not more than 20 % of the cross sectional area K0.

### * Embodiment of Pneumatic Tire

Taking the tread rubber 2G as an example of the tire component to be made from the hybrid rubber tape 15, a method for manufacturing the pneumatic tire is described thereinafter.

In this embodiment, the tire 1 is a radial tire for passenger car.

The carcass 6 is composed of at least one ply 6A of radially arranged cords. The ply 6A extends between the bead portions 4 through the tread portion 2 and sidewall portions 3 and turned up around the bead core 5 in each bead portion 4 from the axially inside to the axially outside of the tire to form a pair of turnup portions 6b and a main portion 6a therebetween.

The bead portions 4 are each provided between the main portion 6a and turned up portion 6b with a bead apex 8 made of a hard rubber compound and extending radially outwardly from the bead core 5.

The tread reinforcing belt 7 comprises a breaker 9 and an optional band 10.

The breaker 9 comprises: at least two cross plies 9A and 9B of metal (steel) cords laid at an angle of from 15 to 40 degrees with respect to the tire equator C.

The band 10 is composed of a ply 10A of a cord or cords wound on the radially outside of the breaker 9 at a small angle of at most about 5 degrees for example almost zero degree with respect to the tire equator C.

The reinforcing cords of the carcass ply 6A, belt plies 9A and 9B and band ply 10A are rubberized with topping rubber compounds, each containing an electrically conductive filler such as carbon black to have a volume resistivity of lower than 1.0x10^8 (ohm cm) after vulcanization. The breaker 9 is disposed radially outside the crown portion of the carcass 6, abutting on the topping rubber of the carcass. The band 10 in this example extends over the entire width of the breaker 9, abutting on the topping rubber of the breaker 9.

In the tread portion 2, a connector rubber 12 is disposed on the radially outside of the tread reinforcing belt 7. The connector rubber 12 is made from the conductive rubber compound and has a volume resistivity of less than 1.0x10^8 (ohm cm) after vulcanization.

In each of the sidewall portions 3, the sidewall rubber 3G is disposed on the axially outside of the carcass 6. The sidewall rubber 3G is extended to beneath the axial edges of the breaker 9, and connected to the radially inner surface of an axial edge portion of the connector rubber 12.

In each of the bead portions 4, the bead rubber 4G is disposed, abutting the topping rubber of the carcass.

On the axially outside of the carcass, the radial outer end of the bead rubber 4G is spliced with the radially inner end of the sidewall rubber 3G.

In this embodiment, the sidewall rubber 3G and bead rubber 4G contain an electrically conductive filler such as carbon black to have a volume resistivity lower than 1.0x10^8 (ohm cm) after vulcanization.

The tread rubber 2G is disposed on the connector rubber 12.

As the connector rubber 12 is optional, when the connector rubber 12 is omitted, the tread rubber 2G is directly disposed on the tread reinforcing belt 7. In such a case, the axial edges of the tread rubber 2G may be electrically connected to the sidewall rubber 3G directly or indirectly through an intermediary conductive rubber component.

In any case, in order to make an electrically conductive path from the tread surface to a surface 14 of the conductive inner structure such as the connector rubber 12, the tread reinforcing belt 7, the sidewall rubber 3G, the intermediary rubber component, the tread rubber 2G has to be electrically conductive from its radially inner surface to radially outer surface.

Thereby, when the tire 1 is mounted on the wheel rim R, as the bead rubber 4G closely contacts with the bead seat of the wheel rim R, the following partially-paralleled conductive path from the wheel rim R to the tread surface is formed.

Bead rubber 4G -> sidewall rubber 3G/carcass and belt topping rubber -> ( collector rubber 12 -> ) Tread rubber

According to the present invention, it is possible to form almost every tire rubber component from a hybrid rubber tape 15, for example, sidewall rubber, bead rubber and the like. But, in this embodiment, only the tread rubber 2G is formed from the hybrid rubber tape 15.

### * Embodiment of Method for manufacturing tire

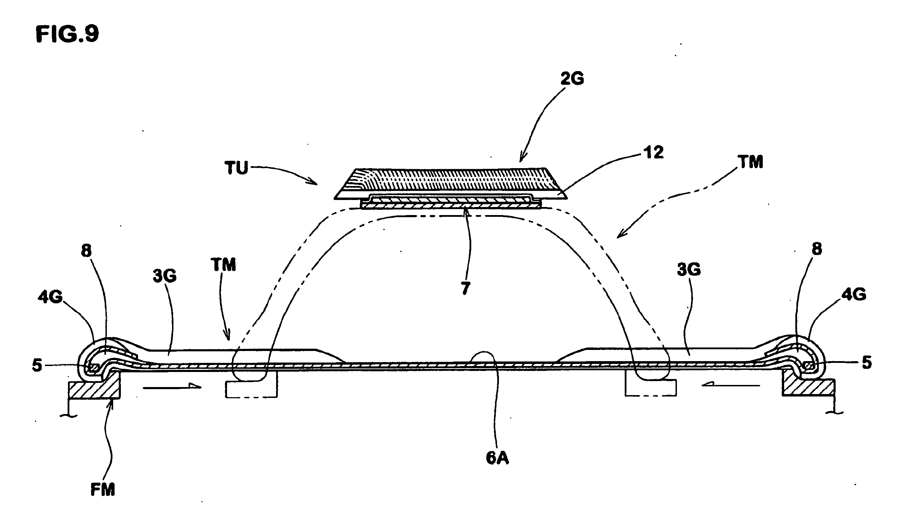

Fig.9 schematically shows a method for manufacturing the pneumatic tire 1.

In this method, the tread rubber 2G, connector rubber 12 and belt 7 are formed as a tread unit TU, using a belt drum D. Then, the tread unit TU is combined with a tire main body TM separately formed, using a tire building drum FM. The tire main body TM includes the carcass 6, sidewall rubber 3G, bead rubber 4G, bead apex rubber 8, bead core 5 and others, excepting the components in the tread unit.

In order to make the tire main body TM, the carcass ply 6A, sidewall rubber 3G and others are applied to around the cylindrical surface of the tire building drum FM.

Then, such cylindrical assembly is shaped into a toroidal shape, while placing the tread unit TU therearound so that the tread unit TU unites with the crown portion of the carcass 6 as indicated by imaginary line, whereby the green tire is formed.

The green tire is put in a vulcanization mold and vulcanized.

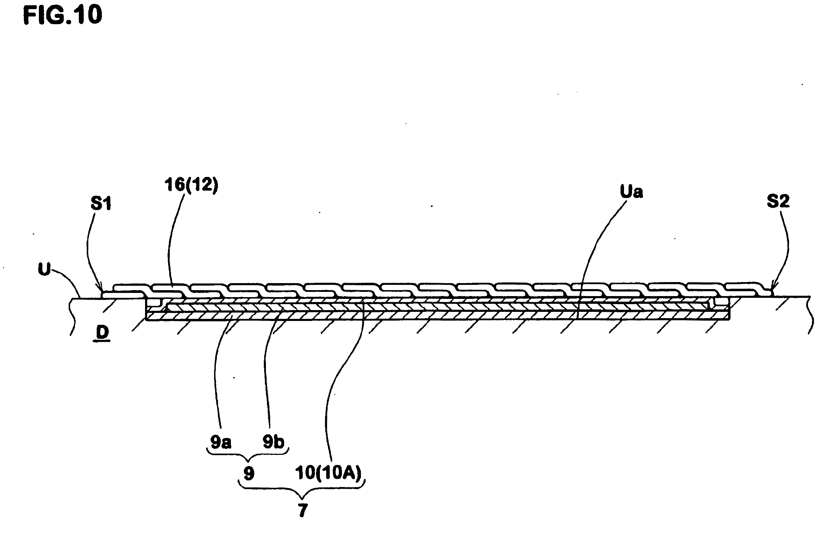

The above-mentioned belt drum D has a shaping surface U which is contractible in order to detach the tread unit TU formed. The shaping surface U is provided with a depressed portion Ua having a width, depth and profile corresponding to the width, thickness and profile of the belt 7 as shown in Fig.10.

To make the tread unit TU, firstly, the belt 7 is wound in the depressed portion Ua of the shaping surface U. The outer circumferential surface of the wound belt 7 becomes substantially same level as the lateral portions of the depressed portion Ua.

On the wound belt 7, the connector rubber 12 is formed so as to extend from one of the lateral portions to the other of the depressed portion Ua across the entire width of the belt 7. In this example, the connector rubber 12 is formed by overlap winding an unvulcanized rubber tape 16 continuously from the one edge S1 to the other edge S2. The unvulcanized rubber tape 16 is made of the electrically conductive rubber compound to have a volume resistivity of lower than 1.0x10^8 (ohm cm) after vulcanization. As explained above, the tape 16 can be manufactured by the above-mentioned apparatus 40 for making the hybrid rubber tape 15.

In the case that there is no connector rubber 12, the tread rubber 2G is formed on the wound belt 7.

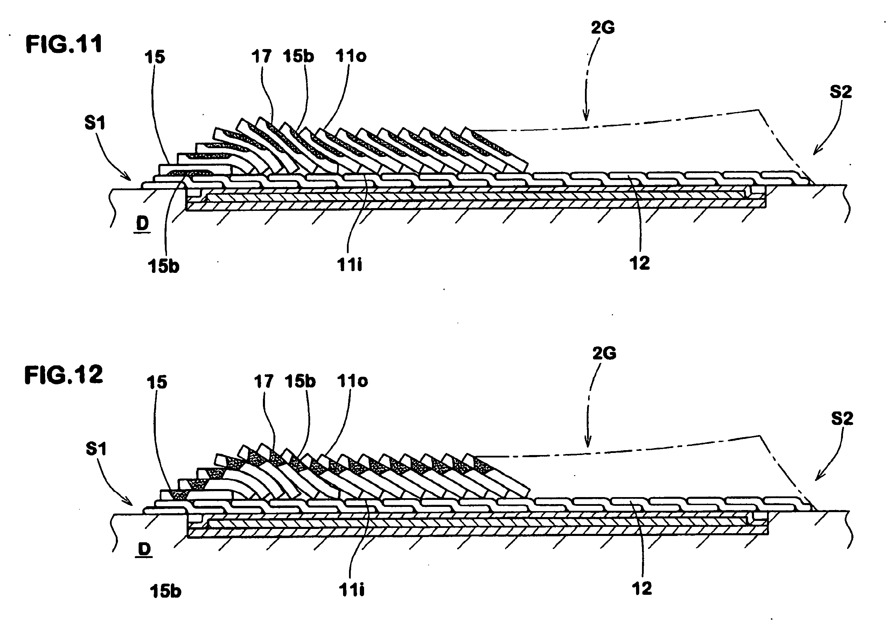

Figs.11, 12 and 13 each show an example of the way of winding the tape 15, wherein a single hybrid rubber tape 15 is wound continuously from one end S1 to the other end S2 of the tread rubber 2G at predetermined variable winding pitches P to form a single layer of the windings.

Fig. 11 shows the use of a hybrid rubber tape according to the invention.

When the hybrid rubber tape 15 is wound in a single layer, it is highly possible that the winding pitches become relatively small in order to produce a larger thickness. Thus, it becomes difficult to maintain a large exposed area 17 of the conductive rubber part 15b.

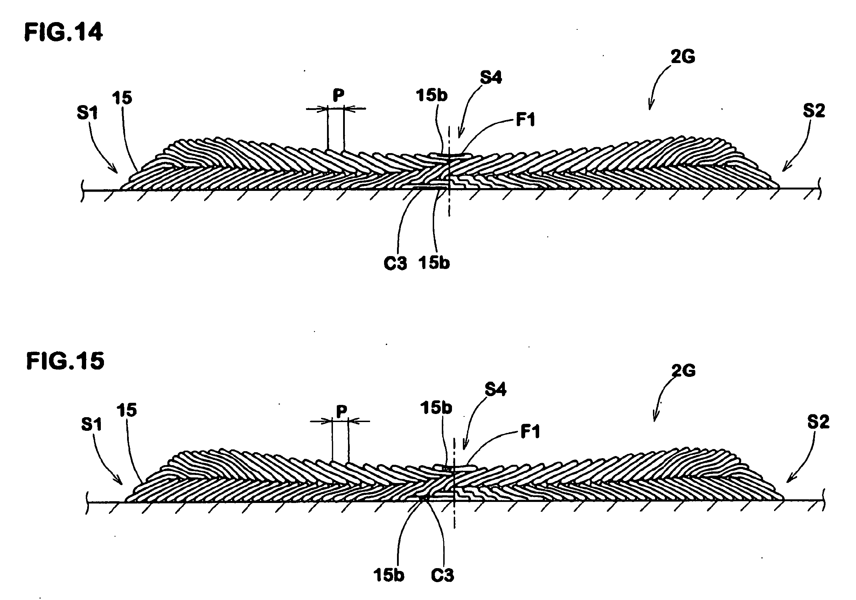

In Figs.14 and 15, therefore, the hybrid rubber tape 15 is wound into a double layered structure to reduce the thickness of one layer and thereby to increase the winding pitches P. As a result, the exposed area 17 of the conductive rubber part 15b can be increased.

In these examples, the winding operation starts from a central position C3 and progresses towards one end S2 of the tread rubber. Then, at the end S2, the traverse direction of the tape is turned towards the other end S1. At the end S1, the traverse direction is again turned towards the end S2, and at the central portion C3, the winding operation is ended. At the terminal end S4 of the tape 15, the entirety of the surface on one side F1 is exposed to maximize the ground contact of the conductive rubber part 15b.

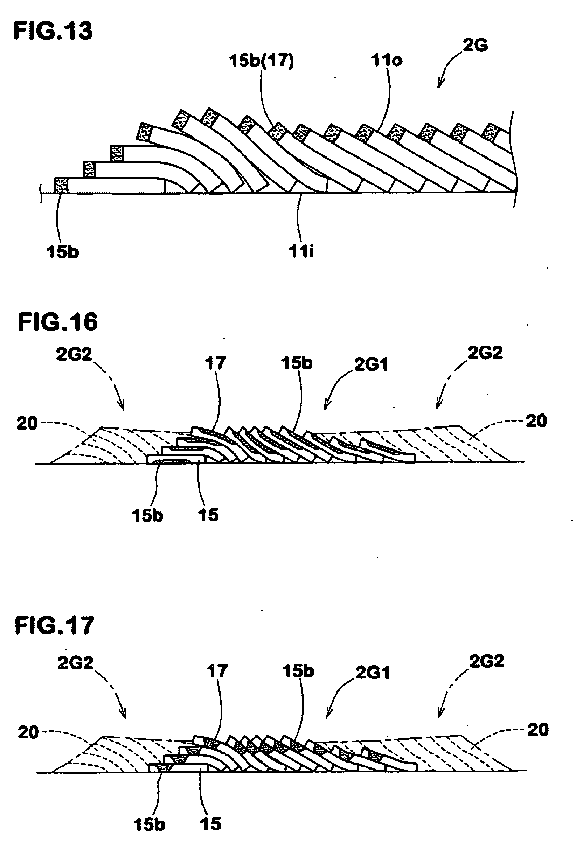

In Figs.16 and 17, the tread rubber 2G is formed by (1) overlap winding the hybrid rubber tape 15 and (2) overlap winding an unvulcanized rubber tape 20 made from the less-conductive rubber compound (ga) in order to further improve the wet performance and rolling resistance. As explained above, the tape 20 can be manufactured by the above-mentioned apparatus 40 for making the hybrid rubber tape 15.

Fig. 16 shows the use of a hybrid rubber tape in accordance with the invention.

In these examples, the windings of the hybrid rubber tape 15 form a central part 2G1, and the windings of the rubber tape 20 form the lateral part 2G2 on each side of the central part 2G1. But, it is not always necessary for the hybrid rubber tape 15 to form the central part 2G1. It is possible to form various parts.

Aside from these three types of winding (single layer type, double layer type, laterally divided type), various ways of winding are possible. Incidentally, mainly used in Figs.11-17 are the tapes shown in Figs. 2 and 4, but the tapes shown in Figs.3 and 5 and others can be used as well.

### * Apparatus for winding Rubber tape

In this example, the above-mentioned apparatus 40 is incorporated in an apparatus 70 for winding a rubber tape (15, 16, 20).

As schematically shown in Fig.6, the apparatus 70 comprises: the tape making apparatus 40; the above-mentioned drum D; a tape applicator 50 including a pair of applicator rollers 50A at the downstream end; a tape accumulator 60 provided between the tape making apparatus 40 and the tape applicator 50; various actuators including an electric motor for the drum D, a traverser for the tape applicator 50 and the like; and a controlling system including a computer. The tape applicator 50 receives the rubber tape supplied from the tape making apparatus 40 through the tape accumulator 60, and lets off the tape towards the drum D through between the applicator rollers 50A. During the tape is let off, the drum D is rotated and the tape applicator 50 traverses the drum D. The traversing speed and direction and the rotating speed and direction are controlled by the controlling system according to the stored program so that the difference between the target cross sectional shape and the cross sectional shape of the tape windings in their entirety becomes minimum.

In the apparatus 70 in this example, the upper and lower applicator rollers 50A can be inverted by an actuator on the request of the controlling system, whereby the rubber tape passing therethrough is twisted 180 degrees and let off towards the drum D in the upside-down state.

In the case that the rubber component to be formed by winding the hybrid rubber tape 15 is the tread rubber 2G, although the adjacent windings of the tape 15 are overlapped with each other, at least a part of the conductive rubber part 15b has to be unoverlapped, in other words, the conductive rubber part 15b is not covered completely by the adjacent winding, and the conductive rubber part 15b has to be exposed at the tread surface.

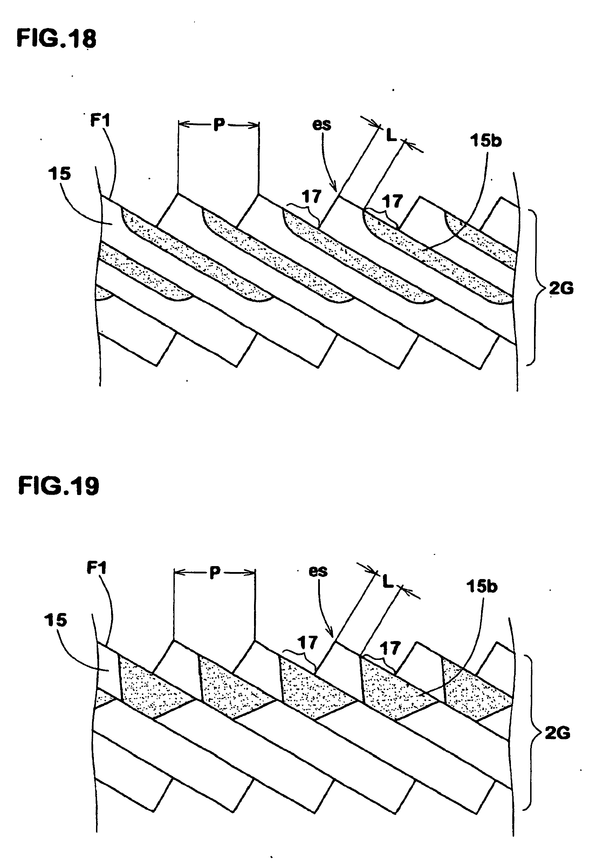

Therefore, as shown in Figs. 18 and 19, it is preferable that the distance L in the widthwise direction of the tape 15 between the outside edge es of the tape 15 and the adjacent edge e2 of the conductive rubber part 15b is less than 20 %, preferably less than 10 %, most preferably 0 % of the tape width Ws. Fig. 18 shows the use of a hybrid rubber tape in accordance with the invention. The width wb of the conductive rubber part 15b is not less than 25 %, preferably not less than 30 %, but not more than 75 %, preferably not more than 70 % of the tape width Ws. The thickness Tb of the conductive rubber part 15b is not less than 10 %, preferably not less than 20 % of the tape thickness Ts. Further, the width Wb is preferably not less than 3 mm, more preferably not less than 5 mm, still more preferably not less than 7 mm, and the thickness Tb is preferably not less than 0.2 mm, more preferably not less than 0.5 mm.

In the case of the conductive rubber part 15b of the through type as shown in Figs.4 and 5 and not according to the invention, it is preferable that the conductive rubber part 15b is gradually decreased in the width from the surface on one side F1 (maximum width Wb) to the surface on the other side F2 (minimum width Wa) in order to increase the area of the interface between the two rubber compounds (ga and gb) and thereby to increase the adhesion between the two different rubber compounds (ga and gb). The width Wa is preferably not less than 10 %, more preferably not less than 20 %, but not more than 80 %, more preferably not more than 70 % of the width Wa. In this case too, the above-mentioned limitations are applied to the width Wb, but, the upper limit is further defined as being preferable to limit to values not more than 50 % of the tape width Ws.

Further, it is also preferable that the conductive rubber part 15b is positioned off the widthwise center of the tape 15. Thereby, the exposed area 17 of the conductive rubber part 15b can be increased. And at the same time, the contact surface area between the less-conductive rubber part 15a of a winding of the tape and the less-conductive rubber part 15a of the adjacent overlapped winding of the tape can be increased to enhance the intergrality of the windings of the tape. Therefore, when winding the hybrid rubber tape 15, it is desirable that for the windings which define the tread surface the conductive rubber part 15b is positioned towards the outer circumferential surface 11o of the tread rubber 2G as much as possible.

### * Electrical connection to other components

In the case of the tapes 15 shown in Figs. 2 and 3, as the conductive rubber part 15b comes to one side F1 only, it is necessary to connect the conductive rubber part 15b to the above-mentioned surface 14 of the conductive inner structure (in this example, the radially outer surface of the connector rubber 12).

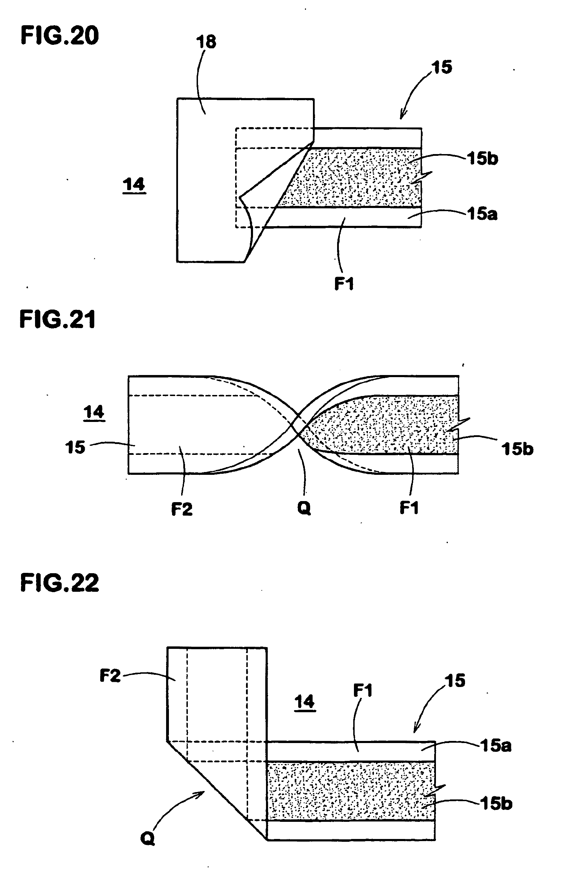

Fig.20 shows an example of the connecting method. In this example, the end of the tape 15 is placed on the conductive inner structure so that the conductive rubber part 15b comes outside, and a patch 18 or thin piece made of the unvulcanized conductive rubber compound (ga) is applied to the end of the tape 15 so that the patch 18 bridges between the conductive rubber part 15b and the conductive inner structure (14).

Fig. 21 shows another example of the connecting method.

In this example, the hybrid rubber tape 15 is wound so that the conductive rubber part 15b comes into contact with the conductive inner structure (14). Then, the hybrid rubber tape 15 is twisted by 180 degrees so that the conductive rubber part 15b comes outside.

Fig.22 shows still another example of the connecting method. In this example, the end of the hybrid rubber tape 15 is folded at 90 degrees so that the conductive rubber part 15b comes into contact with the conductive inner structure (14).

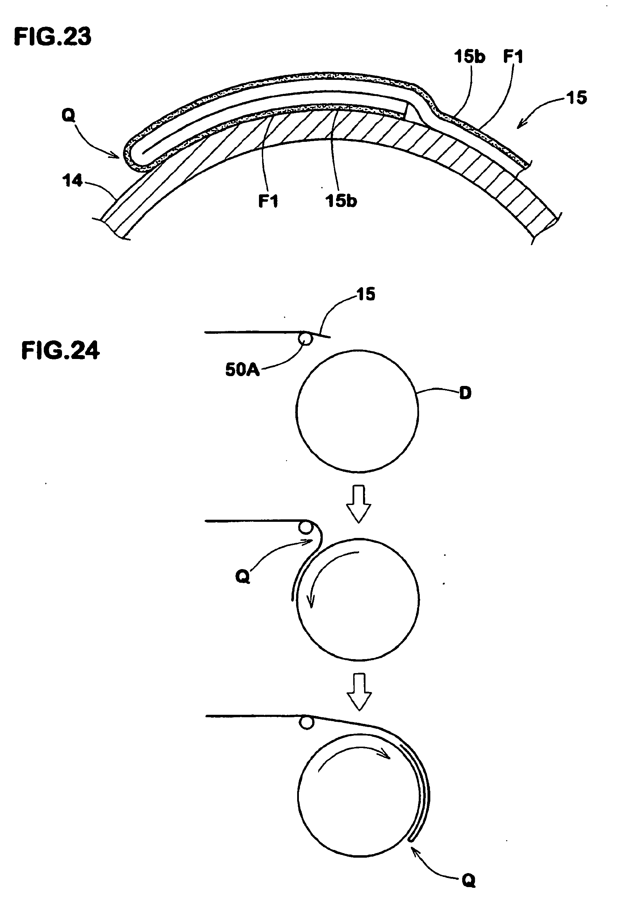

Fig. 23 show yet still another example of the connecting method. In this example, the end of the hybrid rubber tape 15 is turned back so that the conductive rubber part 15b comes into contact with the conductive inner structure (14).

In the case of Fig.23, it is possible that the end of the hybrid rubber tape 15 is first turned back, and then the tape end together with the turned back portion is applied to the conductive inner structure (14). Further, as shown in Fig.24, it is also possible that: at first the hybrid rubber tape 15 is wound in the reverse winding direction so that the conductive rubber part 15b comes into contact with the conductive inner structure (14); and then, the winding direction is turned to the normal winding direction so that the conductive rubber part 15b comes outside.

In the case of the twist method shown in Fig. 21, the reverse point Q can be easily formed by inverting the upper and lower applicator rollers 50A through which the tape 15 passes. Therefore, the tape can be wound without pause, and the reverse point Q can be formed at a plurality positions.

when the windings of the tape 15 has the single-layered structure as shown in Figs. 11-13 and 16-17, the reverse point Q (esp, twist reverse point of Fig.21 and U-turn reverse point of Fig.23) of the tape 15 is preferably formed within the first one turn/winding of the tape 15 in order to minimize the possible disorder of the windings occurring at the tread face due to the reverse point Q.

when the windings of the tape 15 has the double layered structure as shown in Figs. 14-15, it is possible to provide the reverse point Q (twist reverse point of Fig.21) at a plurality of positions, for example, at the ends S1 and center c3, so that the conductive rubber part 15b is exposed at almost every positions on the outer circumferential surface of the tread rubber namely tread surface as well as almost every positions on the inner circumferential surface of the tread rubber abutting the conductive inner structure (14). In such a case, it is preferable that the reverse point Q is formed at a position deeper than the depth of the wear indicator of the tire.

In the above-explained embodiment, the tread rubber is wound around the belt drum D separately from the building of the tire main body TM, but it is also possible to wind the hybrid rubber tape 15 around the carcass 6 shaped into a toroidal shape around which the tread reinforcing belt 7, the optional connector rubber 12 and the like are previously disposed.

### * Comparison tests

Pneumatic radial tires of size 225/55R16 (Rim size 16x7JJ) for passenger cars were manufactured and tested for the electric resistance and rolling resistance as follows.

The tires had the same structure shown in Fig.1 except for the unvulcanized rubber tape used to make the tread rubber. The rubber compounds of the tapes are shown in Table 1.

**Table 1 (parts by weight)**

| Compound | A | B |
|---|---|---|
| Base rubber | | |
| SBR | 80 | 80 |
| BR | 20 | 20 |
| Silica | 50 | 10 |
| Carbon black | 10 | 50 |
| Zinc oxide | 3.0 | 3.0 |
| Stearic acid | 2.0 | 2.0 |
| Age resistor | 2.0 | 2.0 |
| Aroma oil | 20 | 20 |
| Sulfur | 1.5 | 1.5 |

### Rolling resistance test:

The rolling resistance of each test tire (inflated to 200 kPa and loaded with 4.7 kN) was measured at a running speed of 80 km/h, using a tire test drum. The results are indicated in Table 2 by an index based on Ref. 1 being 100, wherein the smaller the index, the smaller the rolling resistance.

### Electric resistance test:

The electric resistance of each test tire was measured according to the procedure specified by the Japan Automobile Tire Manufacturers Association (JATMA).

Firstly, the tire was cleaned up to remove unwanted substances, e.g. mold release agent, dust and the like from the tire surface especially the tread surface and bead surface, and completely dried. Then, the tire was mounted on a wheel rim (16x7JJ) made of an aluminum alloy, using a small amount of soapy water between the bead bottom and bead seat as the lubricant. The tire was inflated to a normal pressure of 200 kPa and left in a test room for two hours. Then, the tire/rim assembly was attached to a shaft 32 to apply a tire load. In order to fit the bead portions to the rim flanges and bead seats, first, a tire load of 5.3 kN was allied for 30 seconds and then released. Again 5.3 kN was allied for 30 seconds and released. Lastly, 5.3 kN was allied for 2 minutes and released. Thereafter, the tire was placed on a polished surface of a metal plate 31 isolated by an insulative plate 30. The electric resistance between the shaft 32 and the metal plate 31 was measured with an ohm meter, applying the tire load of 5.3 kN. The applied voltage was 1000 v, and the stable value after five minutes lapsed from the application of the voltage was read. Such measurement was repeated totally four times per tire by rotating the tire at 90 degree steps. The lowest value in the four measurements is shown in Table 2. The test was carried out in the test room controlled at a temperature 25 degrees C and a humidity 50 %.

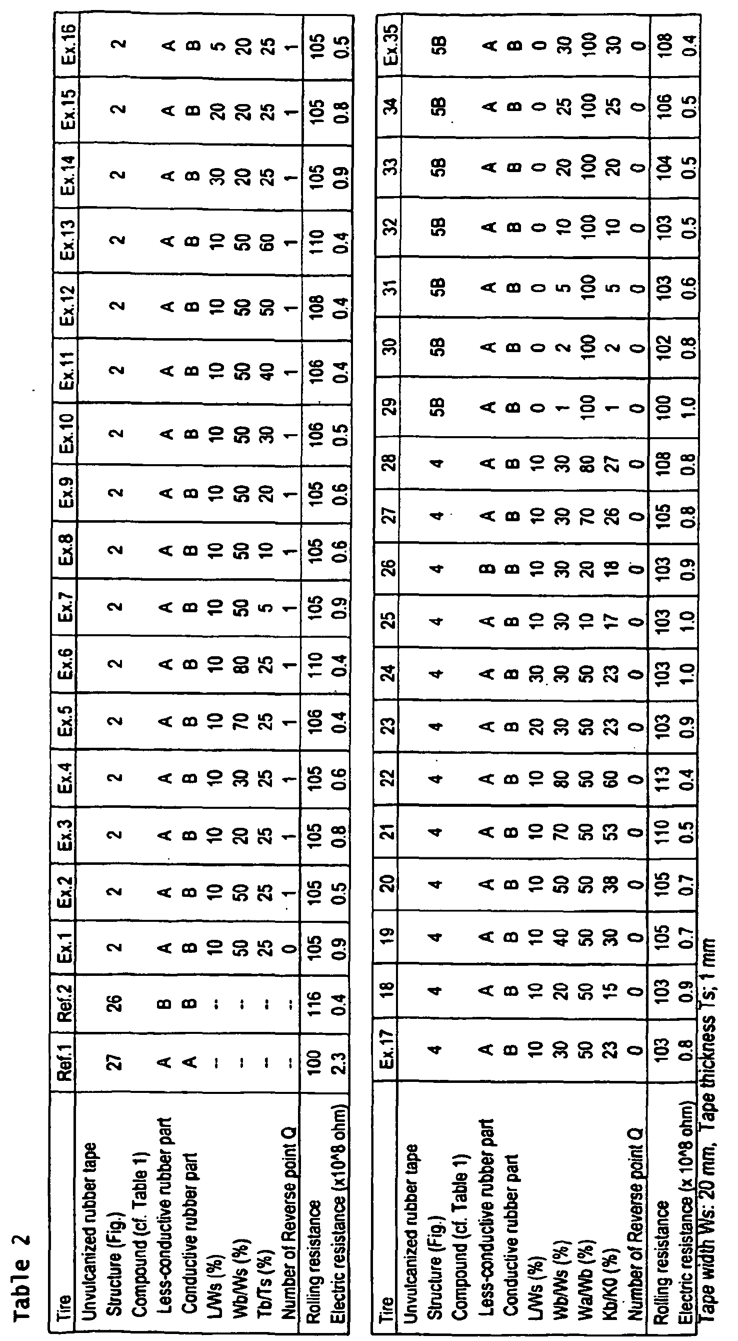

## Claims

1. A pneumatic tire (1) comprising a rubber component made of vulcanized windings of
a hybrid rubber tape (15) having a width (Ws) of from 5 to 50 mm and a thickness (Ts) of from 0.5 to 3.0mm,
the hybrid rubber tape comprising
a conductive rubber part (15b) extending continuously in the longitudinal direction of the tape and made of a conductive rubber compound (gb), and
a less-conductive rubber part (15a) made of a less-conductive rubber compound (ga), wherein
the volume resistivity of the conductive rubber part (15b) after vulcanized is lower than the volume resistivity of the less-conductive rubber part (15a) after vulcanized, and
on only one side (F1) of the tape, the conductive rubber part (15b) forms a part of the surface of the tape, and the remaining part of said surface is formed by the less-conductive rubber part (15a) **characterized in that**
the wound hybrid rubber tape has at least one reverse point (Q) at which the surface (F1) including the conductive rubber part (15b) turns 180 degrees.

2. The pneumatic tire according to claim 1, wherein
said part of the surface(F1) is spaced apart from both edges of the tape.

3. The pneumatic tire according to claim 1, wherein
said part of the surface (F1) extends from one of edges of the tape towards the other edge.

4. The pneumatic tire according to claim 1, 2 or 3, wherein
the width Wb of the conductive rubber part (15b) measured at the surface on one side (F1) of the tape is in a range of from 25 to 75 % of the tape width Ws.

5. The pneumatic tire according to claim 1, 2, or 3, wherein
the conductive rubber part (15b) extends from one side (F1) in the direction to the other side (F2) of the tape, gradually decreasing the width.

6. The pneumatic tire according to claim 1, wherein
said rubber component is a tread rubber (2G) whose radially outer surface defines the tread surface, and
the conductive rubber part (15b) in the vulcanized windings forms a conductive path extending from the tread surface to the radially inner surface of the tread rubber (2G) and connected to a conductive inner structure of the tire which is electrically continuous to a bead portion (4) of the tire contacting with a wheel rim (R) when the tire (1) is mounted thereon.

7. The pneumatic tire according to claim 6, wherein
said conductive inner structure of the tire includes a tread reinforcing cord layer (7) and a connector rubber (12) made from a conductive rubber compound and disposed on the tread reinforcing cord layer, and the tread rubber is disposed on the conductive rubber.

8. The pneumatic tire according to claim 6, wherein
said conductive inner structure of the tire includes a conductive tread reinforcing cord layer, and the tread rubber is disposed on the tread reinforcing cord layer.

9. A method for manufacturing the pneumatic tire as set forth in claim 1, comprising the steps of
building a green tire, and
vulcanizing the green tire, wherein
the building of the green tire includes the steps of:
winding the hybrid rubber tape (16) around an object to form the unvulcanized rubber component in which the conductive rubber part (15b) of the wound tape (15) forms a conductive path extending to the outer circumferential surface thereof from the inner circumferential surface contacting with the object, wherein
the winding of the hybrid rubber tape includes:
reversing the tape to form a reverse point (Q) at at least one position of the wound tape.

10. The method according to claim 9, which further comprises making the hybrid rubber tape by:
extruding the less-conductive rubber compound in the form of a tape;
extruding the conductive rubber compound in the form of a tape; and
applying the two tapes of the compounds each other into one.

11. The method according to claim 10, which further comprises letting the two tapes of the extruded compounds through between calender rollers (48).

12. The method according to claim 9, which further comprises making the hybrid rubber tape by:
extruding the less-conductive rubber compound and the conductive rubber compound together in the form of a tape with one extruder.

## Patentansprüche

1. Luftreifen (1), der eine Kautschukkomponente umfasst, die hergestellt ist aus vulkanisierten Wicklungen aus
einem Hybridkautschukband (15) mit einer Breite (Ws) von 5 bis 50 mm und einer Dicke (Ts) von 0,5 bis 3,00 mm,
wobei das Hybridkautschukband umfasst
einen leitenden Kautschukteil (15b), der sich durchgehend in der Längsrichtung des Bandes erstreckt und aus einer leitenden Kautschukmischung (gb) hergestellt ist, und
einen weniger leitenden Kautschukteil (15a), das aus einer weniger leitenden Kautschukmischung (ga) hergestellt ist, wobei der spezifische Volumenwiderstand des leitenden Kautschukteils (15b) nach dem Vulkanisieren niedriger als der spezifische Volumenwiderstand des weniger leitenden Kautschukteils (15a) nach dem Vulkanisieren ist, und
auf nur einer Seite (F1) des Bandes der leitende Kautschukteil (15b) einen Teil der Oberfläche des Bandes bildet, und der übrige Teil der Oberfläche durch den weniger leitenden Kautschukteil (15a) gebildet ist,
**dadurch gekennzeichnet, dass** das gewickelte Hybridkautschukband zumindest einen Umkehrpunkt (Q) aufweist, an dem die Oberfläche (F1), die den leitenden Kautschukteil (15b) umfasst, sich um 180 Grad dreht.

2. Luftreifen nach Anspruch 1, wobei
der Teil der Oberfläche (F1) von beiden Rändern des Bandes beabstandet ist.

3. Luftreifen nach Anspruch 1, wobei
der Teil der Oberfläche (F1) sich von einem der Ränder des Bandes in Richtung des anderen Randes erstreckt.

4. Luftreifen nach Anspruch 1, 2 oder 3, wobei
die Breite Wb des leitenden Kautschukteils (15b), an der Oberfläche auf einer Seite (F1) des Bandes gemessen, in einem Bereich von 25 bis 75 % der Bandbreite Ws liegt.

5. Luftreifen nach Anspruch 1, 2 oder 3, wobei
der leitende Kautschukteil (15b) sich von einer Seite (F1) in der Richtung zu der anderen Seite (F2) des Bandes erstreckt, wobei die Breite allmählich abnimmt.

6. Luftreifen nach Anspruch 1, wobei
die Kautschukkomponente ein Laufflächenkautschuk (2G) ist, dessen radial äußere Oberfläche die Laufflächen-Oberfläche definiert, und
der leitende Kautschukteil (15b) in den vulkanisierten Wicklungen eine leitende Strecke bildet, die sich von der Laufflächen-Oberfläche zu der radial inneren Oberfläche des Laufflächenkautschuks (2G) erstreckt und mit einer leitenden inneren Struktur des Reifens verbunden ist, die elektrisch durchgehend zu einem Wulstabschnitt (4) des Reifens ist, der mit einer Radfelge (R) in Kontakt steht, wenn der Reifen (1) darauf aufgezogen ist.

7. Luftreifen nach Anspruch 6,
wobei die leitende innere Struktur des Reifens eine Laufflächenverstärkungs-Kordschicht (7) und einen Verbindungskautschuk (12) umfasst, der aus einer leitenden Kautschukmischung hergestellt ist und auf der Laufflächenverstärkungs-Kordschicht angeordnet ist, und der Laufflächenkautschuk auf dem leitenden Kautschuk angeordnet ist.

8. Luftreifen nach Anspruch 6,
wobei die leitende innere Struktur des Reifens eine leitende Laufflächenverstärkungs-Kordschicht umfasst, und der Laufflächenkautschuk auf der Laufflächenverstärkungs-Kordschicht angeordnet ist.

9. Verfahren zum Herstellen des Luftreifens nach Anspruch 1, mit den Schritten
Aufbauen eines Rohreifens, und
Vulkanisieren des Rohreifens, wobei
das Aufbauen des Rohreifens die Schritte umfasst:
Wickeln des Hybridkautschukbandes (16) um ein Objekt, um die unvulkanisierte Kautschukkomponente zu bilden, in der der leitende Kautschukteil (15b) des gewickelten Bandes (15) eine leitende Strecke bildet, die sich zu der äußeren Umfangsfläche davon von der inneren Umfangsfläche, die mit dem Objekt in Kontakt steht, erstreckt, wobei
das Wickeln des Hybridkautschukbandes umfasst:
Umdrehen des Bandes, um einen Umkehrpunkt (Q) an zumindest einer Position des gewickelten Bandes zu bilden.

10. Verfahren nach Anspruch 9, das ferner umfasst Herstellen eines Hybridkautschukbandes durch:
Extrudieren der weniger leitenden Kautschukmischung in der Form eines Bandes;
Extrudieren der leitenden Kautschukmischung in der Form eines Bandes; und
Aneinanderlegen der zwei Bänder der Mischungen zu Einem.

11. Verfahren nach Anspruch 10, das ferner umfasst Hindurchlassen der zwei Bänder der extrudierten Mischungen zwischen Kalanderwalzen (48).

12. Verfahren nach Anspruch 9, das ferner umfasst Herstellen des Hybridkautschukbandes durch:
Extrudieren der weniger leitenden Kautschukmischung und der leitenden Kautschukmischung zusammen in der Form eines Bandes mit einem Extruder.

## Revendications

1. Bandage pneumatique (1) comprenant un composant caoutchouc fait d'enroulements vulcanisés de
une bande de caoutchouc hybride (15) ayant une largeur (Ws) de 5 à 50 mm et une épaisseur (Ts) de 0,5 à 3,0 mm,
la bande de caoutchouc hybride comprenant
une partie en caoutchouc conducteur (15b) s'étendant en continu dans la direction longitudinale de la bande et faite en un composé de caoutchouc conducteur (gb), et une partie en caoutchouc moins conducteur (15a) faite en un composé de caoutchouc moins conducteur (ga),
dans lequel la résistivité volumique de la partie en caoutchouc conducteur (15b) après vulcanisation est inférieure à la résistivité volumique de la partie en caoutchouc moins conducteur (15a) après vulcanisation, et
sur un seul côté (F1) de la bande, la partie en caoutchouc conducteur (15b) forme une partie de la surface de la bande, et la partie restante de ladite surface est formée de la partie en caoutchouc moins conducteur (15a),
**caractérisé en ce que** la bande en caoutchouc hybride enroulé a au moins un point d'inversion (Q) au niveau duquel la surface (F1) comprenant la partie en caoutchouc conducteur (15b) tourne de 180 degrés.

2. Bandage pneumatique selon la revendication 1, dans lequel ladite partie de la surface (F1) est espacée par rapport aux deux bords de la bande.

3. Bandage pneumatique selon la revendication 1, dans lequel ladite partie de la surface (F1) s'étend depuis l'un des bords de la bande en direction de l'autre bord.

4. Bandage pneumatique selon la revendication 1, 2 ou 3, dans lequel la largeur Wb de la partie en caoutchouc conducteur (15b), mesurée à la surface sur un côté (F1) de la bande, est située dans la plage allant de 25 à 75 % de la largeur de bande Ws.

5. Bandage pneumatique selon la revendication 1, 2 ou 3, dans lequel la partie en caoutchouc conducteur (15b) s'étend depuis un côté (FI) dans la direction de l'autre côté (F2) de la bande, en diminuant progressivement de largeur.

6. Bandage pneumatique selon la revendication 1, dans lequel ledit composant caoutchouc est une gomme de bande de roulement (2G) dont la surface extérieure radiale définit la surface de bande de roulement, et
la partie en caoutchouc conducteur (15b) dans les enroulements vulcanisés forme un trajet conducteur s'étendant depuis la surface de bande de roulement vers la surface intérieure radiale de la gomme de bande de roulement (2G) et connectée à une structure intérieure conductrice du pneu qui est en continuité électrique avec une partie de talon (4) du bandage en contact avec une jante (R) quand le pneu (1) est monté sur celle-ci.

7. Bandage pneumatique selon la revendication 6, dans lequel ladite structure intérieure conductrice du pneu comprend une couche de fil câblé de renfort de bande de roulement (7) et un caoutchouc connecteur (12) fait en un composé en caoutchouc conducteur et disposé sur la couche de fil câblé de renfort de bande de roulement, et la gomme de bande de roulement est disposée sur le caoutchouc conducteur.

8. Bandage pneumatique selon la revendication 6, dans lequel ladite structure intérieure conductrice du pneu comprend une couche de fil câblé de renfort de bande de roulement, et la gomme de bande de roulement est disposée sur la couche de fil câblé de renfort de bande de roulement.

9. Procédé pour fabriquer le bandage pneumatique tel que défini dans la revendication 1, comprenant les étapes consistant à
assembler un pneu cru, et
vulcanisé le pneu cru,
dans lequel
l'assemblage du pneu cru comprend les étapes consistant à:
enrouler la bande en caoutchouc hybride (16) autour d'un objet pour former le composant caoutchouc non vulcanisé, la partie en caoutchouc conducteur (15b) de la bande enroulée (15) formant un trajet conducteur s'étendant vers la surface de circonférence extérieure de celle-ci à partir de la surface de circonférence intérieure en contact avec l'objet,
et dans lequel l'enroulement de la bande en caoutchouc hybride comprend une inversion de la bande pour former un point d'inversion (Q) en au moins une position de la bande enroulée.

10. Procédé selon la revendication 9, qui comprend en outre la fabrication de la bande en caoutchouc hybride par :
extrusion du composé en caoutchouc moins conducteur sous la forme d'une bande, extrusion du composé en caoutchouc conducteur sous la forme d'une bande ; et
application des deux bandes des composés ensemble en une seule.

11. Procédé selon la revendication 10, qui comprend en outre l'opération consistant à laisser les deux bandes des composés extrudés entre des cylindres de calandrage (48).

12. Procédé selon la revendication 9, qui comprend en outre la fabrication de la bande en caoutchouc hybride par extrusion du composé en caoutchouc moins conducteur et du composé en caoutchouc conducteur ensemble sous la forme d'une bande avec une extrudeuse.
